# EUROPEAN PATENT SPECIFICATION

(11) **EP 3 920 684 B1**
(45) Date of publication and mention of the grant of the patent: **08.03.2023**
(21) Application number: 20703558.5
(22) Date of filing: 28.01.2020
(51) Int. Cl.: A01G 9/04, A01G 31/02

(54) **FLOATING PANEL AND METHOD OF GROWING PLANTS THEREWITH**
SCHWIMMENDE PLATTE UND VERFAHREN ZUM WACHSEN VON PFLANZEN
PANNEAU FLOTTANT ET PROCÉDÉ DE CULTURE DE PLANTES AVEC CELUI-CI

(30) Priority: 05.02.2019 NL 2022517
(43) Date of publication of application: 15.12.2021
(73) Proprietor: Cultivation Systems B.V., 2517 BV Den Haag (NL)
(72) Inventor: NOORDAM, Christiaan Silvester, 2636 AR Schipluiden (NL); VAN DER KNAAP, Maurice Cornelis Antonius, 2517 BV Den Haag (NL)
(74) Representative: Nederlandsch Octrooibureau
(86) International application number: PCT/NL2020/050041
(87) International publication number: WO 2020/162742

(56) References cited:
- WO-A1-2016/007005
- WO-A1-2018/117829
- US-A1- 2016 270 310

## Description

### Field of the invention

The present invention relates to a floating panel for cultivation of plants, the panel comprising a plurality of through-holes at a top side of the panel, wherein each through-hole is adapted for receiving therein a substrate, such as earth or soil, and a plant or a precursor thereof and extends through the panel from a first plane at said top side to a second plane parallel to and spaced apart from said first plane, the panel further comprising one or more air chambers at a lower side of the panel, each air chamber extending substantially below the second plane and arranged to allow therein the formation of air roots of plants or the precursors thereof which are supported in the substrate of one or more of said through-holes. The one or more air chambers comprise a ceiling into which one or more of said through-holes debouch. A circumferential side wall delimits said chamber and a circumferential bottom edge of the circumferential side wall is arranged for extending into the water when the panel floats on the water. In this manner, a micro-climate may be maintained in each of the air chambers, which promotes the growth of the air-roots.

### Background art

From WO 20161007005 A1 an assembly for floating cultivation of plants on water is known, the assembly comprising a panel-shaped carrier and a removable side support structure which is removably arranged on top of the carrier, the carrier having apertures for plants wherein a growth medium, in particular a growth substrate such as soil, either or not containing a plant or the precursor thereof, is placed in the apertures in said carrier, wherein at least two horizontally opposing sides of an upper part of the growth medium are sideways supported along a height by corresponding sides of the removable side support structure. The panel is adapted for floating on water in a basin in such a manner that the substrate remains spaced apart from the water surface of the basin during cultivation of the plants. Typically, the basin is arranged in a greenhouse, and the panels may be illuminated by sun-light and/or grow-lights to promote plant-growth, as is known in the art.

The known assembly is particularly suitable for carrying plants or precursors thereof during a first phase of cultivation, in which the plants or precursors thereof grow roots in the substrate, the roots eventually extending into one of the air chambers. Each of the air-chambers is open on a lower side facing the water of the basin, and in each of the air chambers a micro climate exists that enables formation of air roots and allows these to take up moisture from the air present in said air chamber. The roots may continue to grow at least until they contact the water of the water basin on which the panel floats. At the end of the first growth phase, the plants have matured enough to start a second growth phase in which the roots are in direct contact with the water on which the panel floats. Between the first and second growth phase the plants are typically replanted in a wider spread, e.g. in the same or in a different floating panel, to provide more space for growth of the leafs. During the second phase the panel typically is arranged in a floating manner on the water surface of water in a basin, wherein the basin is typically arranged in a greenhouse that may be provided with grow lights for illuminating the plants in the panel.

The panel of the present invention is particularly suitable for cultivation of the plants during the second phase, in which the plants have developed roots that for contacting the water of the water basin. At the beginning of the second phase however, the portion of the roots contacting the water of the water basin is relatively small, so that there is a risk dehydration and/or overheating of the plants which may cause stress to the plants. To partially overcome this drawback, it is known to sprinkle water on the plants from above, so that water which is sprinkled onto the substrate can be taken up by the substrate. In this set-up, especially during the beginning of the second growth phase frequent watering from the top side of the panel may be necessary to prevent overheating of the plants. If too little water reaches the plants this may lead to decreased plant-growth or even loss of plants, and sprinkling water on the plants too frequently may result in an overly humid environment in which pests can flourish.

The present invention seeks to provide a panel for the floating cultivation of plants which allows water to be delivered to the plants or precursors thereof from above, e.g. by sprinkling water from above onto the panel or by nebulizing water, in a more effective manner.

It is a further object of the invention to provide such a floating panel which allows for more hygienic cultivation of plants.

### Summary of the invention

To this end, the present invention provides a floating panel for cultivating plants, the panel comprising: a plurality of through-holes at a top side of the panel, each adapted for receiving therein a substrate and a plant or a precursor thereof, each through-hole extending through the panel from a first plane at said top side to a second plane parallel to and spaced apart from the first plane; and at least one air chamber at a lower side of the panel and which is arranged to allow therein the formation of air roots of plants or the precursors thereof supported in the substrate of one or more of said through-holes, each of said air chambers comprising a ceiling into which one or more of said through-holes debouch and a circumferential side wall delimiting said chamber, wherein the circumferential side wall is arranged substantially below the second plane and comprises a circumferential bottom edge arranged for extending into the water when the panel floats on the water; wherein around each of said through-holes one or more associated lower support surfaces are provided which are arranged below the first plane for at least partially supporting the substrate thereon at a location below the first plane; wherein the panel further comprises: a plurality of water-collecting surfaces, each associated with at least one of the through-holes and merging into the one or more lower support surfaces which are provided around said through-hole such that at least one flow path for water is formed from the water-collecting surface to and along the one or more lower support surfaces associated with the through-hole; and a plurality of water barriers, each arranged for substantially preventing flow of waterfrom one of the water collecting surfaces into its associated through-hole along a flow path other than along the one of more lower support surfaces while allowing flow of water from said water collecting-surface along the one or more lower support surfaces. The lower supports are arranged for abutting the sides and/or bottom side of a substrate that is received in a through-hole, preferably in such a manner that the bottom side of the substrate remains spaced apart from body of water on which the panel float, e.g. such that the second plane does not intersect the substrate.

When seen in top view, the water collection surfaces associated with a through-hole provide a larger surface area than the top side of the substrate, the water collection surfaces thus providing an enlarged collection volume for water when water is delivered onto the top of the panel, e.g. by sprinkling water from above onto the panel or by nebulizing water and letting the nebulized water descend onto the panel. Even when the top of the substrate is covered by the plant's leafs, water can be delivered to the substrate by delivering water from above to the water collection surfaces.

When the panel is in an orientation in which the first and second plane are substantially horizontal, as is typically the case when the panel floats on the water, substantially all of the water which is collected by the water collection surfaces is guided along a flow path along the lower support surfaces which at least partially support the substrate. The water barriers substantially prevent water which is collected in the water collecting surfaces from bypassing the flow paths along the lower support surfaces. As a result, substantially all of the collected water may be brought into contact with the substrate, or a with water permeable material such as netting or paper that is provided around the substrate, along flow path, allowing the substrate to act as a sponge taking up the water. When the substrate is saturated, any remaining water on the water-collecting surfaces can flow along the lower support surfaces via the through-hole and the air chamber to the body of water on which the panel floats, during which it may displace some of the water in the substrate to flush contaminations and/or plant extrudates out of the substrate.

During cultivation, as the plants or precursors thereof are subjected to heat, e.g. are exposed to sunlight or grow-lights, water can evaporate from the top side of the substrate which results in cooling of the substrate and the plant. As long as the plants have not developed extensive leafs, evaporation of water through the leafs will only contribute relatively little to the cooling of the plant, though once the leafs gain mass, cooling of the plant may be also achieved by evaporation of water through the leafs.

During use, when the panel floats on water, each water barrier preferably extends above the first plane. The barriers ensuring that water follows a controlled path from the water-collecting surfaces towards and along the sides of the substrate.

The improved delivery of water to the substrate provided by the present invention helps to ensure that the plants or precursors thereof have sufficient water to provide cooling for a prolonged amount of time, allowing watering from the top being performed at relatively large time intervals. As any excess water can flow past the substrate, the risk of overwatering is substantially avoided.

Preferably, when a substrate is received in one of the through holes, it is brought into direct contact with the lower support surfaces. Such a substrate may for instance be a compacted substrate, or substrate held together by a sticking agent. Alternatively, a water permeable packaging may be provided around the sides of the substrate, such as netting, paper and/or any other kind of water permeable material or packaging which allows flow of water there through to the sides of the substrate when in contact with the lower support surfaces.

In an embodiment, when seen in bottom view, the lower support surfaces are adapted for contacting 40% or less, preferably 30% or less, of the bottom side of the substrate, e.g. between 40% and 10% of the area of the bottom side when seen in bottom view. The lower support surfaces are thus adapted to leave open more than half of the bottom side of the substrate, allowing roots to grow out of the bottom side in bottom side.

According to a second aspect, the present invention provides a floating panel for cultivating plants, the panel comprising: a plurality of through-holes at a top side of the panel, each adapted for receiving therein a substrate and a plant or a precursor thereof, each through-hole extending through the panel from a first plane at said top side to a second plane parallel to and spaced apart from the first plane; and at least one air chamber at a lower side of the panel and which is arranged to allow therein the formation of air roots of plants or the precursors thereof supported in the substrate of one or more of said through-holes, each of said air chambers comprising a ceiling into which one or more of said through-holes debouch and a circumferential side wall delimiting said chamber, wherein the circumferential side wall is arranged substantially below the second plane and comprises a circumferential bottom edge arranged for extending into the water when the panel floats on the water; wherein around each of said through-holes one or more associated lower support surfaces are provided which are arranged below the first plane for at least partially supporting the substrate thereon at a location below the first plane; wherein a third plane is arranged parallel to and spaced between the first plane and the second plane in such a manner that a distance between the first plane and the third plane is larger than a distance between the second plane and the third plane, wherein each lower support surface is adapted for being in contact with the substrate and/or with a water permeable packaging around a side of the substrate, over a height extending between at least the first plane and the third plane, the panel further comprising a plurality of water-collecting surfaces, each associated with and surrounding one of the through-holes and merging into the one or more lower support surfaces which are provided around said through-hole such that at least one flow path for water is formed from the water-collecting surface to and along the one or more lower support surfaces associated with the through-hole; wherein each of the lower support surfaces transitions into an adjacent edge of the one or more respective adjacent water-collecting surfaces in such a manner that at least one flow path is formed for guiding the flow of water from the associated water-collecting surface to the lower support surface and along the flow path.

The flow path for water extends along a substantial part of the height of the lower support surfaces so that any water collected by the adjacent water-collecting surface may flow along the lower support surface and contact the substrate, providing a relatively large contact surface which allows the surface to take up a lot of water. Substrates are preferably inserted in the respective through-opening in such a manner that the sides of the substrate are in direct contact with one or more the lower support surfaces along which the water flows, without requiring additional holding means such as a pot or sleeve to hold the substrate in the opening. In this manner, water flowing along the flow path can be absorbed directly by the substrate, and additional costs for a pot or sleeve may be avoided. The substrate may be compacted substrate, a substrate held together by a sticking agent or a substrate held together by netting. Alternatively, the substrate may be held together by a water permeable packaging, e.g. a paper sleeve or cylinder, which may contact the lower sides and allow water to flow there through to be absorbed by the substrate.

The panel preferably further comprises a plurality of water barriers, each arranged for substantially preventing flow of water from one of the water collecting surfaces into its associated through-hole along a flow path other than along the one of more lower support surfaces while allowing flow of water from said water collecting-surface along the one or more lower support surfaces. During use, when the panel floats on water, each water barrier preferably extends above the first plane. The barriers ensuring that water follows a controlled path from the water-collecting surfaces towards and along the sides of the substrate. Additionally, the water barriers may with their inner surfaces thereof abut the sides of the substrate or substrate packaging, in this manner may provide additional side support for the substrate.

The embodiments below relate to both the panel according to the first aspect and the panel according to the second aspect of the invention.

In an embodiment each of the water-collection surfaces completely surround a single one of the through holes.

In an embodiment the lower support surfaces are spaced apart from a plane through the circumferential bottom edge by at least 0,5 cm. When the panel floats on the water and substrates are supported on the lower support surfaces of through openings, the substrates are thus kept spaced apart from the water

In an embodiment the panel is an expansion moulded panel. This allows the panel to be manufactured using a simple mould, the mould preferably being a two-part mould, even when the panel is produced as a monolithic unit. Such an expansion moulded panel will retain its capacity to float, even if the panel is damaged, and substantially isolates the water below panel from heating up. Additionally, expansion moulded panels, in particular when made from expanded polyethylene (EPE), can easily be handled, in particular stacked on top of each other, in a relatively silent manner.

Preferably, the expansion moulded material of the panel has a density of at least 40 gr / litre.

In an embodiment the panel is substantially made from or comprises expanded polystyrene (EPS), expanded polypropylene (EPP) and/or expanded polyethylene (EPE). The toughness of these materials allows the panel to be cleaned using one or more high pressure water jets (>25 bar). EPP in particular is easily recyclable and is available in several different colours.

In an embodiment wherein each of the water-collecting surfaces slopes towards one of said through holes, preferably wherein said through-hole is adjacent to a lower edge the water-collecting surface. For instance, each of the water-collecting surfaces may extend substantially are at a non-zero angle with respect to the first plane. In this manner water received by the water collection surfaces will flow towards one of the through-holes due to gravity. The slope may ensure that no water will remain present on the water-collecting surfaces for an extensive amount of time

In an embodiment the one or more lower support surfaces associated with a through-hole comprise at least two lower support surfaces, preferably at least four lower support surfaces, which are spaced apart from one another around the circumference of the associated through-hole.

In an embodiment the at least two lower support surfaces each comprise a first section and an adjacent second section, wherein the first section extends between the first plane and the third plane and is substantially at an angle between 0° and 10° , preferably between 5° and 10° with respect to a plane normal to the first plane, and wherein the second section extends below the third plane and curves toward a centre-axis of the through-hole. The first sections of the lower support surfaces preferably surfaces a shape corresponding to outer surface segments of a same cone.

In an embodiment the at least two lower support surfaces each comprise a first section and an adjacent second section, wherein the first section extends between the first plane and the third plane substantially at an angle between 0° and 15° with respect to a plane normal to the third plane, and wherein the second section extends below the third plane and curves toward a centre-axis of the through-hole.

In an embodiment the lower support surfaces are provided with gripping edges for gripping against one or more sides of a substrate. The gripping edges help hold on to the substrate and maintain the plant in an upright position, even if the plant is top heavy and/or during shrinking or expansion of the volume of substrate maintain. Preferably, the gripping edges are adapted to grip the sides of the substrate to urge substrate downward into the through hole and substantially block upward movement of the substrate. To this end, the gripping edges may have a toothed cross-section and extend at a downward angle over the horizontal circumference of the lower support surfaces. The gripping edges may be are provided on the first sections of the lower support surfaces.

In an embodiment the first section of each of the lower support surfaces is provided with a plurality of gripping edges, protruding toward the centre of the through-hole, wherein the gripping edges are adapted to hold the substrate in an upright position inside the through-hole when the substrate is substantially dry.

In an embodiment, the lower support surfaces are spaced apart from each along the circumference of their associated through-hole by gaps, preferably wherein each gap is open ended at its bottom side. During cultivation the volume needed by the substrate and plant or precursor thereon may vary. For instance the volume may shrink when water evaporates from the substrate, and may expand, e.g. due to growth of the plant in the substrate and/or absorption of water by the substrate. The gaps allow the substrate and any plant roots therein to expand along the sides of the substrate, in this manner reducing the risk of suffocation of the roots and/or cutting of flow to the roots in the substrate due to expansion of the volume. Additionally, the gaps allow roots to grow out of the side of the substrate through the gaps. Preferably, each gap is open ended at its bottom side, i.e. each gap preferably has an edge which is not circumferential, such as a U-shaped edge which has it open end facing downwards. As roots are thus prevented become entangled with a circumferential edge of the gap, this facilitates removal of the root portion of the plant during harvesting. For instance, the leafs of a plant may be cut by cutting these from a location at the top side of the panel, and the roots can be substantially removed from a location at the bottom side of the panel.

In an embodiment each of the water-collecting surfaces is associated with a single through hole and each through hole is associated with a single one of said water collecting surfaces.

In an embodiment, when seen in top view, all of the water collecting surfaces have a substantially same surface area. The water collecting surfaces associated with through-holes near the distal end of a row of through holes will generally have a different shape than water-collecting surfaces while lie between two through-holes in a row of through holes of the panel. By ensuring the total surface area for collecting water for each of the through-holes is substantially equal, the same amount of water may be collected for each through-hole when water is uniformly delivered to the panel from above. Thus by having a constant total surface area of adjacent water-collecting surfaces for each through-hole, each plant cultivated in a through-hole of the panel will receive the same amount of water, regardless of its position. By substantially same surface area is meant that the difference between surface are of any two of the water-collecting surface is no greater than 15% preferably no greater that 10%, more preferably no greater than 5%.

In an embodiment, when seen in top view, the total surface area of each water-collecting surface is 4 to 10 times the opening area of its associated through-hole. For instance, when, in said top view, the opening area of the through hole is 20cm², then the associated water collection surface may have an area of 80 to 200 cm².

In an embodiment the panel is further provided with one or more air holes which extend from the top side of the panel into one of the one or more air chambers, wherein at the location adjacent to the opening of the air hole at the top side, one or more ridges are provided which extend above the opening. The air holes allow some exchange of air between the interior of the air chamber and the exterior thereof, in particular the exchange oxygen rich air from the exterior of air chamber to the interior and exchange of gases e.g. methane and ethylene coming out the water below the float from the interior to the exterior. The ridges substantially prevent the leafs of a plant from blocking the air hole. The one or more ridges preferably comprise two spaced apart ridges, one on either side of the air hole. The air hole is preferably arranged at the intersection of two adjacent water-collection surfaces.

In an embodiment the through holes of the plurality of through-holes are arranged in at least two parallel rows along a longitudinal direction of the panel, wherein the through-holes in each row are spaced equidistantly. Preferably, the through holes of each row debauch a in same air chamber. For instance, the through holes of different rows may debauch in separate air chambers, or the through holes of all rows may debauch in a single air chamber.

In an embodiment the top side of the panel further comprises an upward facing surface which extends parallel to and between the first plane and second plane, wherein each of the water-collecting surfaces is raised with respect to said upward facing surface. Thus, there is a non-zero vertical distance between the first plane and the upward facing surface of the panel. During use, plants growing in the substrate develop leafs which extend at least partially upwards from the first plane. These leafs may bend downwards under their own weight. The vertical distance between the position at which the plants grow and the upward facing surface of the panel allows leafs to grow for a longer period of time before they may come into contact with the upward facing surface of the panel. Thus it is substantially prevented that the leafs rot due to contact the upward facing surface which may be wet. Additionally, as the leafs are kept substantially spaced apart from the upward facing surface, air can pass under the leafs. As a result, leafs are less likely to develop rot or suffer from pests, and no or less chemicals, such as pesticides and fungicides are needed.

In an embodiment the upward facing surface a circumferential raised edge is provided for collecting water on the upward facing surface. The circumferential raised edge, which is arranged below the first plane and preferably above the third plane, may have a height of between 1,5 and 3 mm. In particular when the leafs are small and do not contact the upward facing surface, water can collect on the upward facing surface and subsequent evaporation of the water helps to cool the panel as well as the plants held therein.

In an embodiment, for each through hole, when seen in cross-sectional view through the second plane, the area of said through-hole is between 90% and 70% of an area of said through-hole when seen in cross-sectional view through the first plane. Thus a relatively large opening exists in the ceiling of the air chamber, providing a relatively unobstructed area for root growth of a plant or precursor thereof during cultivation of a plant in a substrate held in the through-hole of the panel.

In an embodiment the panel is formed as a single piece, e.g. by expansion moulding, injection moulding or blow moulding or a combination thereof. The panel thus is easy to stack, store and transport. The panel is preferably made of a mono-material such as a plastic polymer, such as polypropylene, polyethylene, though alternatively the single piece can manufactured from two or more different materials such as plastic polymers.

According to a third aspect, the present invention provides an assembly for floating cultivation of plants, the assembly comprising the floating panel according the first and/or second aspect of the invention as described herein, and further comprising a plurality of substrates, each substrate provided in one of the plurality of through-holes and arranged for arranged for receiving a plant or precursor thereof therein, wherein a side of each of the substrates is at least partially in direct contact with the one or more two lower support surfaces of a through-hole. The plant or precursor thereof may have already been inserted in the substrate, or may be inserted in the substrate at a later time.

In an embodiment the substrate is a compacted substrate, a substrate held together by a sticking agent or a substrate held together a water permeable packaging, such as by netting, a paper sleeve, and or a paper pot. Such a water permeable packaging allows water permeate therethrough to the sides of the substrate that is held in the packaging.

According to a fourth aspect the invention provides a method of cultivating plants using a floating panel according the first aspect and/or a panel according to the second aspect of the present invention, the method comprising the steps of:
- providing at least one substrate with a plant or precursor thereof in a through-hole of the panel, the provided substrate having a smaller surface area when viewed from above than an opening area of the through-hole;
- floating the panel in a water-filled basin.

In an embodiment the method comprises the further step of.
- providing water to the top side (T) of the panel, causing the substrate to expand in circumference to match an opening area of the through-hole at the first and/or second plane.

The expansion of the substrate causes the substrate to at least partially close off the opening between the air chamber and the through-hole and therewith the opening to the open atmosphere, thereby allowing a microclimate developing inside the air chamber.

In an embodiment the water is delivered provided to the top side (T) of the panel until water is flowing into the basin via the air chamber. Once the substrate is saturated with water, any additional water can thus flows via the through hole and air chamber into the basin. It may thus be avoided that water remain onto the water-collecting surfaces.

In an embodiment the method further comprises the steps of:
- letting the plants grow;
- removing the panel from the basin;
- cutting a top portion of each plant and leaving remaining portion of the plant and corresponding substrate in the panel;
- removing the substrates with the remaining plants portions from the through-holes of the panel; and
- cleaning the panel using a pressure washer.

After cleaning with the pressure washer, the panels are sufficiently clean (sanitized?) for re-use, allowing the panels being stacked and stored until required or immediately being provided with new substrates, each containing a plant or precursor thereof. The panels are sufficiently strong to withstand cleaning with waterjets pressurized at pressures of at least 25 bar, preferable between 30-50 bar.

### Short description of drawings

Embodiments of a floating panel according to the present invention will be described by way of example, with reference to the attached drawings, in which
Fig. 1A shows a stack of two floating panels according to the invention;
Fig. 1B shows a top view of the top floating panel of Fig. 1A;
Fig. 2 shows cross-sectional side view through line II-II of Fig. 1B;
Fig. 3A and 3B each show a cross-sectional view along plane III of Fig. 2, respectively with a plant with air roots and a plant with roots which reach the water;
Fig. 3C shows a cross-sectional view of an alternative embodiment wherein an upward facing surface of the panel is provided with a circumferential raised edge;
Figs. 4A - 4C, shows a detail of a perspective view, a top view and a cross-sectional view through the second plane of a through opening and water collecting surface of the panel of Fig. 1,
Fig. 5A shows the relation between leaf mass per plant and cultivation time;
Fig. 5B shows the relation between leaf mass per m² of panel and cultivation time;
Fig. 5C shows an example of how the substrate's moisture content can vary with and cultivation time.

### Description of embodiments

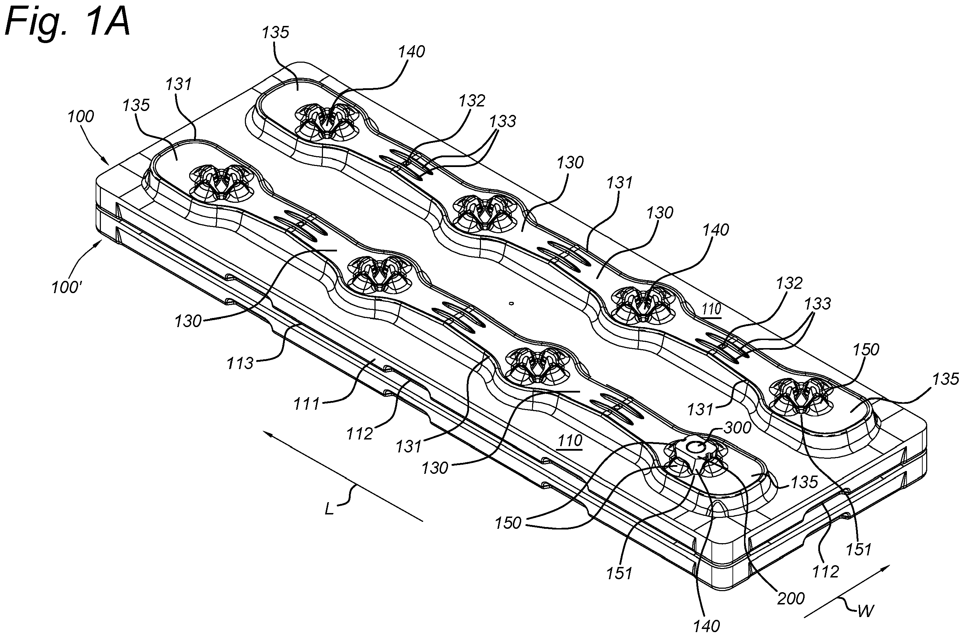

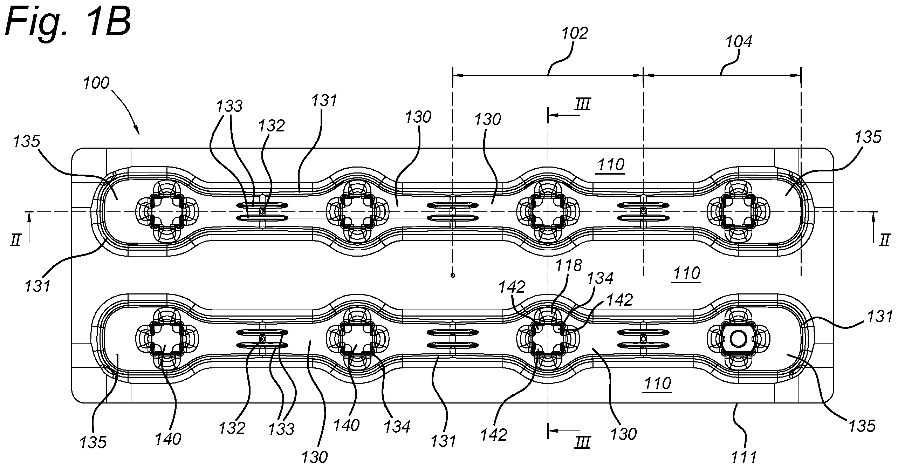

Fig. 1A shows an isometric view of a stack of two floating panels 100, 100' according to the invention, and Fig. 1B shows a top view of the panel 100. The panels 100, 100' have an identical construction, with panel 100 stacked on top of panel 100'. Each panel is substantially made as a single expansion moulded piece from expansion moulded expanded polypropylene (EPP), allowing the panel to be manufactured using a simple mould. As an alternative to being made from EPP, the panel can be made of another expansion moulded material, such as expanded polystyrene (EPS) or expanded polyethylene (EPE) or a mix thereof. In the embodiment shown, the expansion moulded material of the panel has a density of at least 40 gr/litre. Besides providing ease of manufacturing, the material from which the panel is constructed allows the panel to be cleaned using a high pressure water spray, a high pressure water spray here being defined as a water spray at a pressure of 25 bar or more, e.g. between 30 and 50 bar.

The panel 100 has a substantially rectangular shape with a length of about 1200 mm and a width of about 400 mm, and comprises an upward facing surface 110 and an oppositely facing circumferential bottom edge 120 at a lower side of the panel. When the panel 100 is stacked on top of another panel 100', as shown, the bottom edge 113 abuts the corresponding upward facing surface of the panel 100'. The outer side wall of the panel is provided with recessed handgrips 112, which are formed as blind openings, i.e. do not provide a through-opening from the exterior of the outer side wall to the interior of panel. Thus, there will be no draft of air through the handgrips into the interior of the air chamber 160.

At a location above the upward facing surface 110, the panel 100 is provided with a number of water-collecting surfaces 130,135, each sloping towards a corresponding through-hole 140. Each of the through-holes is adapted for supporting therein a substrate 200 in which a plant or precursor thereof 300 is provided. For reasons of clarity, in Fig. 1A only one substrate 200 is shown, though it should be understood that during use, when the panel 100 is floating on the water of a water basin with its circumferential bottom edge 113 in the water, each of the through-holes 140 will accommodate a corresponding substrate in which a plant or precursor thereof has been provided.

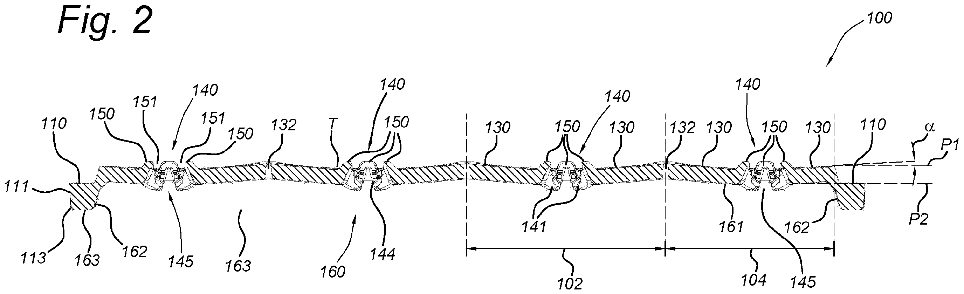

Fig. 2 schematically shows a cross-sectional side-view though along line II-II in Fig. 1B, showing the through-holes 140 in greater detail. Each of the through holes 140 extends from a first plane P1 which is parallel to and spaced apart from a second plane P2 which substantially coincides with the upward facing surface 110 of the panel 100. An air chamber 160 is formed substantially below the first plane P1, the openings 140 debouching into a ceiling 161 of the air chamber, the ceiling 161 in turn merging into a circumferential side wall 162 has a circumferential lower edge 163. When the panel 100 floats on the water, the air chamber 160 is thus substantially delimited by the water surface, the circumferential side wall 162, the ceiling 161 and at least partially by any substrates in the through openings, so that a micro-climate is formed in the air chamber. In particular, the air chamber 160 allows humid air to collect therein so that air roots can absorb moisture therefrom, as the circumferential side wall substantially minimizes draft in the air chamber which could be detrimental to the air roots.

In order to allow some exchange of air between the interior of the air chamber and the exterior thereof, in particular the exchange oxygen rich air from the exterior of air chamber to the interior and exchange of gases e.g. methane and ethylene coming out the water below the float from the interior to the exterior, the panel 100 is further provided with a number of air holes 132 which extend through the panel 100 from an upper side thereof and debouch in the ceiling 161 of air chamber 160.

As can be seen in Fig. 1A, on either side of each air hole 132 ridges 133 are provided which protrude upwardly beyond the opening of the air hole. During cultivation of a plant, the plant's leafs will grow, and the ridges 133 serve to space such a leaf apart from the opening of the air hole to prevent the leaf from blocking the opening of the air hole.

The plurality of through-holes 140 for accommodating therein a substrate are arranged in two rows which extend along the longitudinal direction L of the panel, with a distance between two furthest spaced apart through-holes in a row being at least 80% of the length of the panel. Within each row the through-holes are spaced substantially equidistantly from each other. As already indicated above, in Fig. 1A a substrate 200 in which a precursor 300 of a plant is arranged, is shown in only a single one of the through-holes 140. However, during use of the panel 100 in the floating cultivation of plans, generally the through-holes 140 will all contain a substrate in which a plant or the precursor thereof has been provided.

Each of the through-holes 140 is surrounded by an associated water-collecting surface 130, 135 which merges into the associated through hole. To ensure flow of water, e.g. water that is sprinkled from above onto the water collecting surfaces 130,135 , from the water collecting surface to a substrate held in the corresponding through-hole 140, each water-collecting surface 130 slopes towards a corresponding through-hole 140 and has a lowest portion which merges into said through-hole. In the example shown in Fig. 2 the water collecting surfaces slope at an angle α of about 8 degrees with respect to the first plane P1. At their outer edges the water-collecting surfaces comprise a shared circumferential raised ridge 131 (see Figs. 1A and 1B) for preventing water from flowing off the water collecting surfaces in a direction other than towards a through-hole.

Further provided around each through opening are four water barriers 150 which are spaced apart from each other by gaps 151 and are arranged for abutting a substrate and providing support for the substrate along the sides thereof. The water barriers 150 project above the first plane P1 and are adapted for blocking the flow of water from the adjacent water-collecting surfaces 130,135 into the through-hole 140 along flow paths other than via the gaps 151 and lower support surfaces 141. Thus, for any water which has accumulated on a water-collection surface, the flow path of least resistance to the associated through opening is from the water collecting surface, around the upper side-supports and into the through-opening via the lower support surfaces. As the lower support surfaces are arranged for directly contacting the substrate, the water will come into contact with the substrate so that it may be absorbed thereby.

The water-collection surfaces 130,135 are shaped such that the collection volume provided by each of the water collection surfaces is substantially equal. For instance, the water collection surfaces 135 associated with the through-hole at the distal ends of each row provide a substantially same water collection volume as the water collection surface 130 that are associated with a through-hole that is arranged between two through-holes of the same row. When water is delivered on the panel from above in a substantially uniform manner, e.g. using a sprinkling installation located above the panel, each water collecting surface 13,135 will thus collect a substantially same volume of water which will subsequently be guided, via the lower support surfaces, along the sides of the substrates.

The total length 104 of water-collecting surfaces 130 of the first and last through-holes along the longitudinal direction L of the plate is shorter than the total length 102 of the water-collecting surfaces there between. To ensure plants receive the same amount of water, regardless of the position of the through-hole they are planted in, the total water-collecting surface providing water to a through-hole is constant for all through-holes in the panel. Thus the shorter total length 104 of water-collecting surfaces 130 of the first and last through-holes is compensated for by having a wider surface over at least a length of the water-collecting surface along the longitudinal direction L at least one water-collecting surface adjacent to the outer through-holes than the remaining water-collecting surfaces.

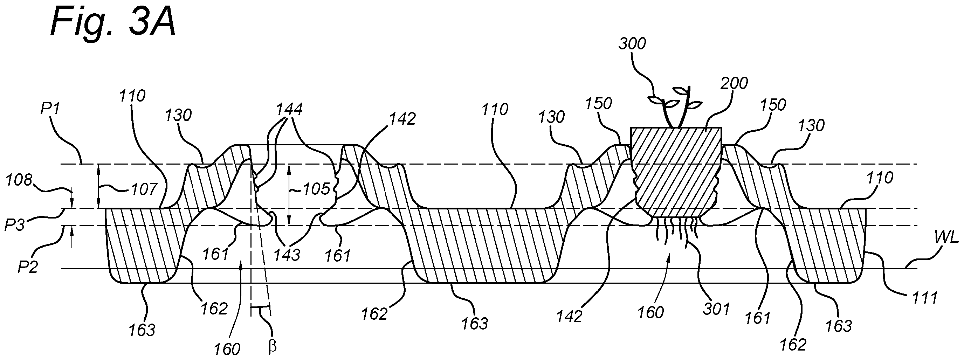

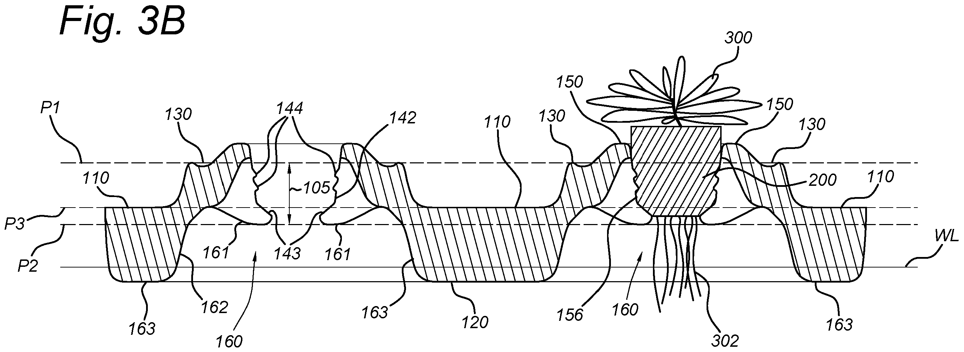

Fig. 3A and 3B each show a cross-sectional view along plane III of Fig. 2, respectively with a plant with air roots 301 and a plant with roots 302 which reach into the water. Due to the water collection surfaces lying well above the upper surface 110, the leafs of the plant shown in Fig. 3B can grow further, substantially without contacting the water collection surface 140, and also substantially without contacting the top surface 110. In addition to the first plane P1 and the second plane P2, Fig. 3A shows a third plane P3 arranged between planes P1 and P2 and parallel thereto, the third plane P3 being at a distance 107 to the first plane P1 which is greater than distance 108 from the third plane to the second plane P2.

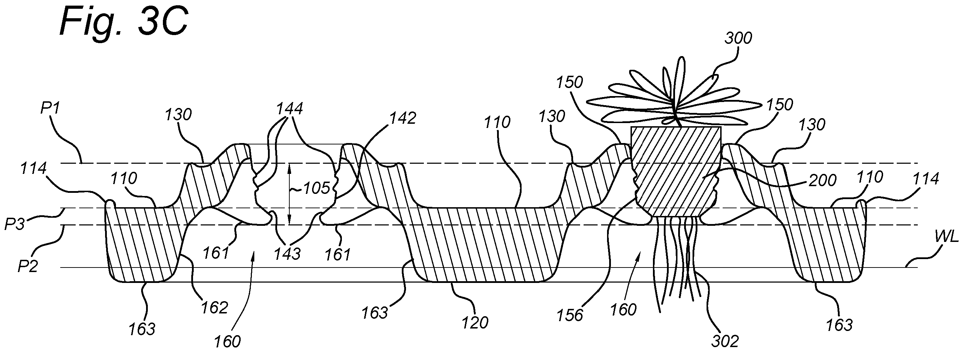

Fig. 3C shows an alternative embodiment of the panel of the invention, wherein the upward facing surface 110 is provided with a circumferential raised edge 114 at its outer circumference. When water is delivered to the panel from above, the circumferential raised edge 114 will contain some of the water on the upward facing surface. Though this water is not guided to flow to the substrate, the water can evaporate from the upward facing surface, in this manner cooling the panel as well as the plants held by the panel.

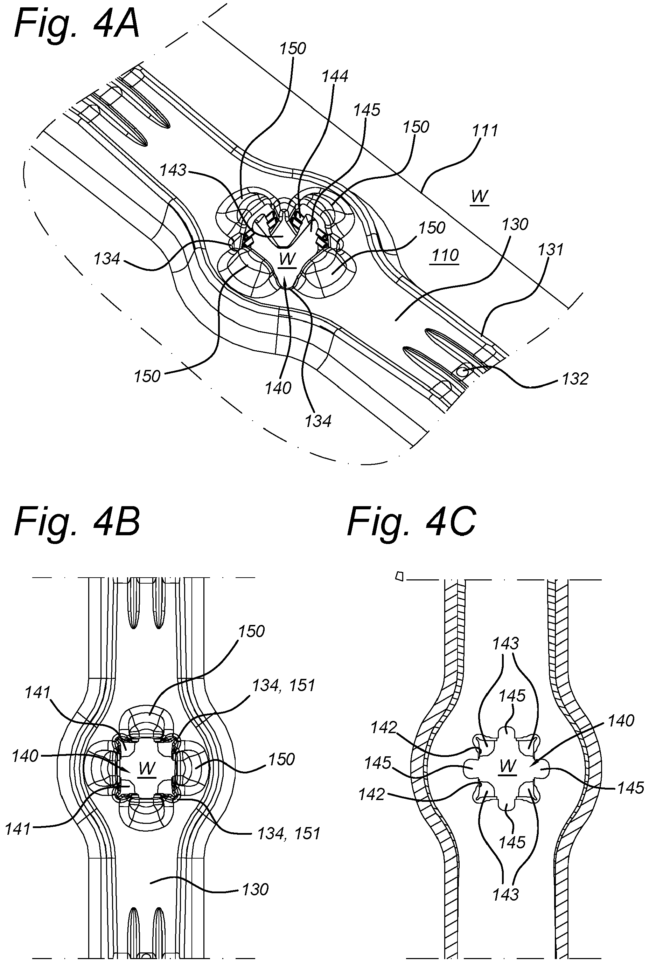

Fig.4A shows a detailed perspective view of a portion a through-hole 140 of the panel 100 as the panel 100 floats on water W. Figs. 4B and 4C show respectively a top view and a schematical cross-sectional view through the third plane P3 shown in Fig 3A of the same portion. Fig. 4A-4C show the lower support surfaces comprising a first section 142 and an adjacent second section 143 which curves towards a centre-axis of the through opening. The second portion is arranged for supporting a bottom side of the substrate thereon. The first section is provided with toothed gripping edges which are arranged for preventing movement of the substrate out of the through-opening in an upward direction. The gripping edges are also adapted for maintaining the orientation of the plant and substrate. During growth, the plant grows roots in the substrate, causing the substrate to expand against the gripping edges. In this manner for instance, when the plant grows to be top-heavy, the gripping edges help to prevent toppling of the plant.

The first section 142 second section 143 can also be seen in Figs. 3A and 3B. The top view of Fig. 4B shows the water barriers 150 to be spaced apart from each other by gaps 151, wherein the gaps are adjacent to the lower edges 134 of the water collecting surface 130. The flow path of least resistance for any water that has been collected by the water collecting surface thus is from the water collecting surface, through the gap 151 and along the lower support surface 141 on which the substrate is supported.. Fig. 4C shows that also between the lower support surfaces gaps 145 are provided. These gaps allow roots to grow out of the side of the substrate, and also allow some expansion of the substrate and plant therein, e.g. due to growth of the plant or due to the substrate absorbing water.

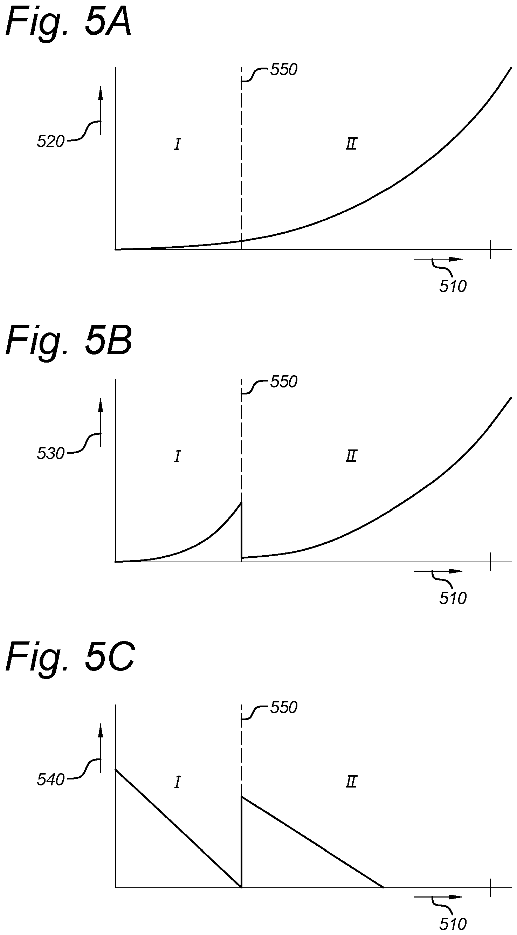

Figs. 5A-5C respectively show the relation between leaf mass per plant, plant mass per m² of a panel, and moisture content of the substrate during cultivation time, with cultivation time set along the x-axis 510 and respectively the leaf mass per plant, the plant mass per m² of a panel, and an exemplary moisture content of the substrate along the y-axes 520, 530, 540. A dashed line 550 indicates a split of the cultivation time between a first growth phase I and a second growth phase II.

During the first growth phase, plants or the precursors thereof develop roots in the substrate, the roots subsequently growing into the air chamber below the substrate. The leaf mass of each plant or precursor thereof is relatively low and develops slowly during the first phase, as the roots first need to grow and develop. The plants or precursors and their corresponding substrates thereof are generally arranged close together, and the leaf mass grows as the throughout the first and second phase as shown in Fig. 5A. At the beginning of the first growth phase, the substrate for each plant or precursor thereof has been sprinkled from above to that the water content of the substrates is relatively high. During growth in the first growth phase, the plants or precursors thereof obtain liquid from the substrate and/or from the air in the air chamber below the through-hole in which they are positioned. Due to the small leaf mass, the plants or precursors thereof lack the capacity to provide in their own cooling needs under bright (sun) light. This may be compensated for to some extent by moisture evaporating from the top side of the substrate.

During the first phase, the combined plant and substrate mass per m² of panel gradually increases due to growth of the plants. At the end of the first phase, plants may have grown such that their leafs approach each other which hinders further growth of the plants. At this time, the plants may be rearranged on the same or on another panel such that there is more space available between the plants , allowing further growth thereof. In Fig. 5B the rearranging of plants at greater distances from each other is illustrated by the sharp drop in the combined plant and substrate mass per m² per panel. At the start of the second growth phase II, further moisture in the form of water is typically provided to the substrates, as illustrated in in Fig. 5C. The panel of the present invention allows such further moisture to be delivered the substrates from above, even if the leafs of the plants substantially completely cover the top sides of the substrates. Thus, between the first and second growth phase the plants can be rearranged without having to water the plants from other directions than from above.

In summary, the invention provides a floating panel for cultivation of plants, comprising a plurality of through-holes at a top side of the panel, wherein each through-hole is adapted for receiving therein a substrate and a plant or a precursor thereof and extends through the panel from a first plane at said top side to a second plane parallel to and spaced apart from said first plane, the panel further comprising an air chamber at a lower side of the panel, the air chamber extending substantially below the second plane and arranged to allow therein the formation of air roots of plants or the precursors thereof which are supported in the substrate of one or more of said through-holes. The one or more air chambers comprise a ceiling into which one or more of said through-holes debouch. A circumferential side wall delimits said chamber and a circumferential bottom edge of the circumferential side wall is arranged for extending into the water when the panel floats on the water. The panel is further provided with spaced apart lower support surfaces for supporting thereon the substrate, and with water-collecting surfaces which transition into the lower support surfaces for guiding the flow of water from the water collecting surfaces along the lower support surfaces.

The present invention has been described with reference to a number of exemplary embodiments as shown in the drawings. Obvious modifications and alternative implementations of some parts or elements will occur to the skilled person upon reading and understanding the preceding detailed description. It is intended that the invention be construed as including all such modifications and alterations insofar as they come within the scope of the appended claims.

### List of reference numerals used in the drawings:

- P1: first plane
- P2: second plane
- P3: third plane

- W: water
- WL: water surface
- 100, 100': floating panel
- 102: length of a water-collecting surface associated with a through-hole which is located between two other through-holes in a row of through-holes;
- 104: length of a water-collecting surface associated with a through-hole at a distal end of a row of through holes;
- 105: distance between first plane P1 and second plane P2
- 107: distance between first plane P1 and third plane P3
- 108: distance between third plane P3 and second plane P2

- 110: upward facing surface
- 111: circumferential outer side wall
- 112: recessed hand grip in side wall
- 113: circumferential bottom edge of circumferential outer side wall
- 114: circumferential raised edge

- 130: water-collecting surface
- 131: shared circumferential ridge
- 132: air hole
- 133: ridge adjacent to air hole
- 134: lower edge of water-collecting surface
- 135: water-collecting surface

- 140: through-hole for accommodating a substrate
- 141: lower support surfaces
- 142: first section of lower support surface
- 143: second section of lower support surface which is curved toward the center of the throughhole
- 144: gripping edges
- 145: gap between lower support surfaces
- 150: water barrier
- 151: gap between adjacent water barriers

- 160: air chamber
- 161: ceiling of the air chamber
- 162: circumferential side wall
- 163: circumferential bottom edge of side wall

- 200: substrate
- 300: plant or a precursor thereof
- 301: air roots of the plant or precursor thereof
- 302: water roots of the plant or precursor thereof
- 303: leafs of the plant

- α: non-zero angle of water collecting surface with respect to the first plane
- β: angle of first section of lower support surface with respect to vertical

## Claims

1. A floating panel (100) for cultivating plants, the panel comprising:
a plurality of through-holes (140) at a top side (T) of the panel, each adapted for receiving therein a substrate (200) and a plant or a precursor (300) thereof, each through-hole extending through the panel from a first plane (P1) at said top side to a second plane (P2) parallel to and spaced apart from the first plane (P1); and
at least one air chamber (160) at a lower side of the panel and which is arranged to allow therein the formation of air roots of plants or the precursors thereof supported in the substrate of one or more of said through-holes, each of said air chambers (160) comprising a ceiling (161) into which one or more of said through-holes (140) debouch and a circumferential side wall (162) delimiting said chamber, wherein the circumferential side wall is arranged substantially below the second plane (P2) and comprises a circumferential bottom edge (163) arranged for extending into the water when the panel floats on the water;
wherein around each of said through-holes (140) one or more associated lower support surfaces (141) are provided which are arranged below the first plane (P1) for at least partially supporting the substrate (200) thereon at a location below the first plane(P1);
**characterized in that** the panel further comprises:
a plurality of water-collecting surfaces (130, 135), each associated with at least one of the through-holes and merging into the one or more lower support surfaces (141) which are provided around said through-hole such that at least one flow path for water is formed from the water-collecting surface to and along the one or more lower support surfaces associated with the through-hole; and
a plurality of water barriers (150), each arranged for substantially preventing flow of water from one of the water collecting surfaces into its associated through-hole along a flow path other than along the one of more lower support surfaces while allowing flow of water from said water collecting-surface (130,135) along the one or more lower support surfaces (141).

2. A floating panel (100) according to claim 1, **characterized in that** a third plane (P3) is arranged parallel to and spaced between the first plane (P1) and the second plane (P2) in such a manner that a distance between the first plane (P1) and the third plane (P3) is largerthan a distance between the second plane (P2) and the third plane (P3),
wherein each lower support surface is adapted for being in contact with the substrate (200) and/or with a water permeable packaging around a side of the substrate, over a height extending between at least the first plane (P1) and the third plane (P3),
wherein each of the lower support surfaces (141) transitions into an adjacent edge (134) of the one or more respective adjacent water-collecting surfaces (130) in such a manner that at least one flow path is formed for guiding the flow of water from the associated water-collecting surface to the lower support surface and along the flow path.

3. A floating panel (100) for cultivating plants, the panel comprising:
a plurality of through-holes (140) at a top side (T) of the panel, each adapted for receiving therein a substrate (200) and a plant or a precursor (300) thereof, each through-hole extending through the panel from a first plane (P1) at said top side to a second plane (P2) parallel to and spaced apart from the first plane (P1); and
at least one air chamber (160) at a lower side of the panel and which is arranged to allow therein the formation of air roots of plants or the precursors thereof supported in the substrate of one or more of said through-holes, each of said air chambers (160) comprising a ceiling (161) into which one or more of said through-holes (140) debouch and a circumferential side wall (162) delimiting said chamber, wherein the circumferential side wall is arranged substantially below the second plane (P2) and comprises a circumferential bottom edge (163) arranged for extending into the water when the panel floats on the water;
wherein around each of said through-holes (140) one or more associated lower support surfaces (141) are provided which are arranged below the first plane (P1) for at least partially supporting the substrate (200) thereon at a location below the first plane(P1);, **characterized in that** a third plane (P3) is arranged parallel to and spaced between the first plane (P1) and the second plane (P2) in such a manner that a distance between the first plane (P1) and the third plane (P3) is larger than a distance between the second plane (P2) and the third plane (P3),
wherein each lower support surface is adapted for being in contact with the substrate (200) and/or with a water permeable packaging around a side of the substrate, over a height extending between at least the first plane (P1) and the third plane (P3),
the panel further comprising a plurality of water-collecting surfaces (130, 135), each associated with and surrounding one of the through-holes and merging into the one or more lower support surfaces (141) which are provided around said through-hole such that at least one flow path for water is formed from the water-collecting surface to and along the one or more lower support surfaces associated with the through-hole;
wherein each of the lower support surfaces (141) transitions into an adjacent edge (134) of the one or more respective adjacent water-collecting surfaces (130) in such a manner that at least one flow path is formed for guiding the flow of water from the associated water-collecting surface to the lower support surface and along the flow path.

4. The floating panel according to any of the preceding claims, wherein the lower support surfaces are spaced apart from each along the circumference of their associated through-hole by gaps, preferably wherein each gap is open ended at its bottom side.

5. The floating panel according to any one of the preceding claims, wherein each of the plurality of water-collecting surfaces (130,135) are at a non-zero angle (α) with respect to the first plane (P1), wherein each through-hole (140) is adjacent to a lower edge (134) of at least one of said water-collecting surfaces (130,135).

6. The floating panel according to any one of the preceding claims, wherein the one or more lower support surfaces associated with a through hole comprise at least two lower support surfaces (141), preferably at least four lower support surfaces, which are spaced apart from one another around the circumference of the associated through-hole.

7. The floating panel according to claim 6 when dependent on claim 2 or 3, wherein the at least two lower support surfaces each comprise a first section (142) and an adjacent second section (143), wherein the first section extends between the first plane (P1) and the third plane (P3) substantially at an angle (β) between 0° and 15°, preferably between 5° and 10° with respect to a plane normal to the third plane, and wherein the second section extends below the third plane and curves toward a centre-axis of the through-hole.

8. The floating panel according to any one of the preceding claims, wherein the lower support surfaces are provided with gripping edges (144) for gripping against one or more sides of a substrate.

9. The floating panel according to claim 7 or 8, wherein the first section of each of the lower support surfaces is provided with a plurality of gripping edges (144), protruding toward the centre of the through-hole.

10. The floating panel according to any one of the preceding claims, wherein each of the water-collecting surfaces is associated with a single through hole and each through hole is associated with a single one of said water collecting surfaces.

11. The floating panel according to claim 10, wherein, when seen in top view, all of the water collecting surfaces have a substantially same surface area.

12. The floating panel according to claim 10 or 11, wherein, when seen in top view, the total surface area of each water-collecting surface is 4 to 10 times the opening area of its associated through-hole.

13. The floating panel according to any one of the preceding claims, further provided with one or more air holes (132) which extend from the top side of the panel into one of the one or more air chambers (160), wherein at a location adjacent to the opening of the air hole at the top side, one or more ridges (133) are provided which extend above the opening.

14. The floating panel according to any one of the preceding claims, wherein the through holes of the plurality of through-holes (140) are arranged in at least two parallel rows along a longitudinal direction (L) of the panel, wherein the through-holes in each row are spaced equidistantly.

15. The floating panel according to any one of the preceding claims, wherein the top side (T) of the panel further comprises an upward facing surface (110) which extends parallel to and between the first plane (P1) and second plane (P2), wherein each of the water-collecting surfaces is raised with respect to said upward facing surface (110).

16. The floating panel according to claim 15, wherein on the upward facing surface a circumferential raised edge is provided for collecting water on the upward facing surface.

17. The floating panel according to any one of the preceding claims, wherein for each through hole, when seen in cross-sectional view through the second plane, the area of said through-hole is between 90% and 70% of an area of said through-hole when seen in cross-sectional view through the first plane (P1).

18. The floating panel according to any one of the preceding claims, wherein the panel is formed as a single piece, preferably as an expansion moulded piece.

19. The floating panel according to any one of the preceding claims, wherein the panel comprises or is substantially made from expanded polypropylene, expanded polyethylene or expanded polystyrene.

20. An assembly for floating cultivation of plants, the assembly comprising the floating panel according to any one of claims 1-19 and a plurality of substrates (200), each substrate provided in one of the plurality of through-holes and arranged for receiving a plant or precursor thereof therein, wherein a side of each of the substrates is at least partially in direct contact with the one or more two lower support surfaces (141) of a through-hole.

21. The assembly according to claim 20, wherein the substrate is a compacted substrate, a substrate held together by a sticking agent or a substrate held together by a water-permeable packaging such as by netting and/or a paper sleeve.

22. A method of cultivating plants using a floating panel according to any one of claims 1-19, the method comprising the steps of:
- providing at least one substrate with a plant or precursor thereof in a through-hole of the panel, the provided substrate having a smaller surface area when viewed from above than an opening area of the through-hole;
- floating the panel in a water-filled basin;

23. Method according to claim 22, comprising the further step of
- providing water to the top side of the panel, causing the substrate to expand in circumference to match an opening area of the through-hole at the first and/or second plane.

24. The method according to claim 22 or 23, wherein water is provided to the top side of the panel until water is flowing into the basin via the air chamber.

25. The method according to claim 22, 23 or 24, the method further comprises the steps of:
- letting the plants grow;
- removing the panel from the basin;
- cutting a top portion of each plant and leaving remaining portion of the plant and corresponding substrate in the panel;
- removing the substrates with the remaining plants portions from the through-holes of the panel; and
- cleaning the panel by using a pressure washer.

## Patentansprüche

1. Schwimmendes Flächenelement (100) zum Züchten von Pflanzen, wobei das Flächenelement Folgendes aufweist:
eine Vielzahl von Durchgangslöchern (140) an einer Oberseite (T) des Flächenelementes, die jeweils ausgebildet sind, um darin ein Substrat (200) und eine Pflanze oder einen Vorläufer bzw. Sämling (300) davon aufzunehmen, wobei jedes Durchgangsloch sich durch das Flächenelement von einer ersten Ebene (P1) an der Oberseite zu einer zweiten Ebene (P2) erstreckt, die parallel zu der ersten Ebene (P1) ist und von dieser beabstandet ist; und
zumindest eine Luftkammer (160) an einer Unterseite des Flächenelementes, welche so angeordnet ist, dass sie darin die Bildung von Luftwurzeln von Pflanzen oder den Sämlingen davon gestattet, die in dem Substrat von einem oder mehreren der Durchgangslöcher getragen werden, wobei jede der Luftkammern (160) eine Decke (161) aufweist, in welche eines oder mehrere der Durchgangslöcher (140) sich öffnen, und eine umlaufende Seitenwand (162), welche die Kammer begrenzt, wobei die umlaufende Seitenwand im Wesentlichen unter der zweiten Ebene (P2) angeordnet ist und eine umlaufende untere Kante (163) aufweist, die so angeordnet ist, dass sie sich in das Wasser erstreckt, wenn das Flächenelement auf dem Wasser schwimmt;
wobei um jedes der Durchgangslöcher (140) eine oder mehrere assoziierte untere Tragflächen (141) vorgesehen sind, die unter der ersten Ebene (P1) angeordnet sind, um zumindest teilweise das Substrat (200) darauf an einer Stelle unter der ersten Ebene (P1) zu tragen;
**dadurch gekennzeichnet, dass** das Flächenelement weiter Folgendes aufweist:
eine Vielzahl von Wassersammelflächen (130, 135), die jeweils mit mindestens einem der Durchgangslöcher assoziiert sind und in die eine oder die mehreren unteren Tragflächen (141) übergehen, die um das Durchgangsloch vorgesehen sind, so dass zumindest ein Flusspfad für Wasser von der Wassersammelfläche zu der einen oder den mehreren unteren Tragflächen, die mit dem Durchgangsloch assoziiert ist bzw. sind, und entlang dieser geformt wird; und
eine Vielzahl von Wasserbarrieren (150), die jeweils angeordnet sind, um im Wesentlichen einen Fluss von Wasser von einer der Wassersammelflächen in ihr assoziiertes Durchgangsloch entlang eines anderen Flusspfades zu verhindern als entlang der einen oder der mehreren unteren Tragflächen, während ein Fluss von Wasser von der Wassersammelfläche (130, 135) entlang der einen oder der mehreren unteren Tragflächen (141) gestattet wird.

2. Schwimmendes Flächenelement (100) nach Anspruch 1, **dadurch gekennzeichnet, dass** eine dritte Ebene (P3) parallel zu der ersten Ebene (P1) und der zweiten Ebene (P2) und beabstandet von diesen in einer solchen Weise angeordnet ist, dass eine Distanz zwischen der ersten Ebene (P1) und der dritten Ebene (P3) größer ist als eine Distanz zwischen der zweiten Ebene (P2) und der dritten Ebene (P3),
wobei jede untere Tragfläche so ausgebildet ist, dass sie in Kontakt mit dem Substrat (200) ist und/oder in Kontakt mit einer wasserdurchlässigen Packung um eine Seite des Substrates, und zwar über eine Höhe, die sich zwischen zumindest der ersten Ebene (P1) und der dritten Ebene (P3) erstreckt,
wobei jede der unteren Tragflächen (141) in eine benachbarte Kante (134) der einen oder der mehreren jeweiligen benachbarten Wassersammelflächen (130) in einer solchen Weise übergeht, dass zumindest ein Flusspfad geformt wird, um den Fluss von Wasser von der assoziierten Wassersammelfläche zu der unteren Tragfläche und entlang des Flusspfades zu leiten.

3. Schwimmendes Flächenelement (100) zum Züchten von Pflanzen, wobei das Flächenelement Folgendes aufweist:
eine Vielzahl von Durchgangslöchern (140) an einer Oberseite (T) des Flächenelementes, die jeweils ausgebildet sind, um darin ein Substrat (200) und eine Pflanze oder einen Vorläufer bzw. Sämling (300) davon aufzunehmen, wobei jedes Durchgangsloch sich durch das Flächenelement von einer ersten Ebene (P1) an der Oberseite zu einer zweiten Ebene (P2) erstreckt, die parallel zu der ersten Ebene (P1) ist und von dieser beabstandet ist; und
zumindest eine Luftkammer (160) an einer Unterseite des Flächenelementes, welche so angeordnet ist, dass sie darin die Bildung von Luftwurzeln von Pflanzen oder den Sämlingen davon gestattet, die in dem Substrat von einem oder mehreren der Durchgangslöcher getragen werden, wobei jede der Luftkammern (160) eine Decke (161) aufweist, in welche eines oder mehrere der Durchgangslöcher (140) sich öffnen, und eine umlaufende Seitenwand (162), welche die Kammer begrenzt, wobei die umlaufende Seitenwand im Wesentlichen unter der zweiten Ebene (P2) angeordnet ist und eine umlaufende untere Kante (163) aufweist, die so angeordnet ist, dass sie sich in das Wasser erstreckt, wenn das Flächenelement auf dem Wasser schwimmt;
wobei um jedes der Durchgangslöcher (140) eine oder mehrere assoziierte untere Tragflächen (141) vorgesehen sind, die unter der ersten Ebene (P1) angeordnet sind, um zumindest teilweise das Substrat (200) darauf an einer Stelle unter der ersten Ebene (P1) zu tragen;
**dadurch gekennzeichnet, dass** eine dritte Ebene (P3) parallel zu der ersten Ebene (P1) und der zweiten Ebene (P2) und parallel zu diesen in einer solchen Weise angeordnet ist, dass eine Distanz zwischen der ersten Ebene (P1) und der dritten Ebene (P3) größer ist als eine Distanz zwischen der zweiten Ebene (P2) und der dritten Ebene (P3),
wobei jede untere Tragfläche so ausgebildet ist, dass sie in Kontakt mit dem Substrat (200) ist und/oder in Kontakt mit einer wasserdurchlässigen Packung um eine Seite des Substrates herum, und zwar über eine Höhe, die sich zwischen zumindest der ersten Ebene (P1) und der dritten Ebene (P3) erstreckt,
wobei das Flächenelement weiter eine Vielzahl von Wassersammelflächen (130, 135) aufweist, die jeweils mit einem der Durchgangslöcher assoziiert sind und diese umgeben und in die einen oder die mehreren unteren Tragflächen (141) übergehen, die um das Durchgangsloch vorgesehen sind, so dass zumindest ein Flusspfad für Wasser von der Wassersammelfläche zu einer oder mehreren unteren Tragflächen, die mit dem Durchgangsloch assoziiert sind und entlang dieser geformt wird;
wobei jede der unteren Tragflächen (141) in eine benachbarte Kante (134) der einen oder der mehreren jeweiligen benachbarten Wassersammelflächen (130) in einer solchen Weise übergeht, dass zumindest ein Flusspfad geformt wird, um den Fluss von Wasser von der assoziierten Wassersammelfläche zu der unteren Tragfläche und entlang des Flusspfades zu leiten.

4. Schwimmendes Flächenelement nach einem der vorhergehenden Ansprüche, wobei die unteren Tragflächen voneinander entlang des Umfangs ihres assoziierten Durchgangsloches durch Spalte beabstandet sind, wobei vorzugsweise jeder Spalt an seiner Unterseite ein offenes Ende hat.

5. Schwimmendes Flächenelement nach einem der vorhergehenden Ansprüche, wobei jede der Vielzahl von Wassersammelflächen (130, 135) in einem Winkel (α) ungleich null bezüglich der ersten Ebene (P1) sind, wobei jedes Durchgangsloch (140) benachbart zu einer unteren Kante (134) von mindestens einer der Wassersammelflächen (130, 135) ist.

6. Schwimmendes Flächenelement nach einem der vorhergehenden Ansprüche, wobei die eine oder die mehreren unteren Tragflächen, die mit einem Durchgangsloch assoziiert sind, zumindest zwei untere Tragflächen (141) aufweisen, vorzugsweise zumindest vier untere Tragflächen, die voneinander um den Umfang des assoziierten Durchgangsloches beabstandet sind.

7. Schwimmendes Flächenelement nach Anspruch 6, wenn dieser von Anspruch 2 oder 3 abhängt, wobei die mindestens zwei unteren Tragflächen jeweils einen ersten Abschnitt (142) und einen benachbarten zweiten Abschnitt (143) aufweisen, wobei der erste Abschnitt sich zwischen der ersten Ebene (P1) und der dritten Ebene (P3) im Wesentlichen in einem Winkel (β) zwischen 0° und 15°, vorzugsweise zwischen 5° und 10° bezüglich einer Ebene senkrecht zu der dritten Ebene erstreckt, und wobei der zweite Abschnitt sich unter die dritte Ebene erstreckt und zu einer Mittelachse des Durchgangsloches krümmt.

8. Schwimmendes Flächenelement nach einem der vorhergehenden Ansprüche, wobei die unteren Tragflächen mit Greifkanten (144) versehen sind, um an einer oder mehreren Seiten eines Substrates zu greifen.

9. Schwimmendes Flächenelement nach Anspruch 7 oder 8, wobei der erste Abschnitt von jeder der unteren Tragflächen mit einer Vielzahl von Greifkanten (144) versehen ist, die zu der Mitte des Durchgangsloches vorstehen.

10. Schwimmendes Flächenelement nach einem der vorhergehenden Ansprüche, wobei jede der Wassersammelflächen mit einem einzigen Durchgangsloch assoziiert ist, und wobei jedes Durchgangsloch mit einer einzelnen der Wassersammelflächen assoziiert ist.

11. Schwimmendes Flächenelement nach Anspruch 10, wobei in einer Draufsicht alle der Wassersammelflächen ein im Wesentlichen gleiches Oberflächenmaß haben.

12. Schwimmendes Flächenelement nach Anspruch 10 oder 11, wobei in der Draufsicht, das gesamte Oberflächenmaß von jeder Wassersammelfläche 4 bis 10 Mal der Öffnungsfläche ihres assoziierten Durchgangsloches ist.

13. Schwimmendes Flächenelement nach einem der vorhergehenden Ansprüche, welches weiter mit einem oder mehreren Luftlöchern (132) versehen ist, die sich von der Oberseite des Flächenelementes in eine oder mehrere Luftkammern (160) erstrecken, wobei an einer Stelle benachbart zu der Öffnung des Luftlochs an der Oberseite eine oder mehrere Kanten (133) vorgesehen sind, die sich über die Öffnung erstrecken.

14. Schwimmendes Flächenelement nach einem der vorhergehenden Ansprüche, wobei die Durchgangslöcher der Vielzahl von Durchgangslöchern (140) in zumindest zwei parallelen Reihen entlang einer Längsrichtung (L) des Flächenelementes angeordnet sind, wobei die Durchgangslöcher in jeder Reihe gleich beabstandet sind.

15. Schwimmendes Flächenelement nach einem der vorhergehenden Ansprüche, wobei die Oberseite (T) des Flächenelementes weiter eine nach oben weisende Oberfläche (110) aufweist, die sich parallel zu der ersten Ebene (P1) und der zweiten Ebene (P2) und zwischen diesen erstreckt, wobei jede der Wassersammelflächen bezüglich der nach oben weisenden Oberfläche (110) erhaben ist.

16. Schwimmendes Flächenelement nach Anspruch 15, wobei an der nach oben weisenden Oberfläche eine umlaufende erhabene Kante vorgesehen ist, um Wasser auf der nach oben weisenden Oberfläche zu sammeln.

17. Schwimmendes Flächenelement nach einem der vorhergehenden Ansprüche, wobei für jedes Durchgangsloch, wenn man dieses in einem Querschnitt durch die zweite Ebene ansieht, die Fläche bzw. der Querschnitt des Durchgangsloches zwischen 90 % und 70 % eines Querschnittes des Durchgangsloches ist, wenn man dieses in einer Querschnittsansicht durch die erste Ebene (P1) ansieht.

18. Schwimmendes Flächenelement nach einem der vorhergehenden Ansprüche, wobei das Flächenelement als ein einziges Teil geformt ist, vorzugsweise als ein expansionsgeformtes Teil.

19. Schwimmendes Flächenelement nach einem der vorhergehenden Ansprüche, wobei das Flächenelement expandiertes Polypropylen, expandiertes Polyethylen oder expandiertes Polystyrol aufweist oder im Wesentlichen daraus gemacht ist.

20. Anordnung zur schwimmenden Züchtung von Pflanzen, wobei die Anordnung das schwimmende Flächenelement nach einem der Ansprüche 1-19 und eine Vielzahl von Substraten (200) aufweist, wobei jedes Substrat in einem der Vielzahl von Durchgangslöchern vorgesehen ist und angeordnet ist, um eine Pflanze oder einen Vorläufer bzw. Sämling davon in sich aufzunehmen, wobei eine Seite von jedem der Substrate zumindest teilweise in direktem Kontakt mit einer oder mehreren von zwei unteren Tragflächen (141) eines Durchgangsloches ist.

21. Anordnung nach Anspruch 20, wobei das Substrat ein verdichtetes Substrat ist, ein Substrat, welches durch ein Klebemittel zusammengehalten wird, oder ein Substrat, welches durch eine wasserdurchlässige Packung zusammengehalten wird, wie beispielsweise durch ein Netz und/oder eine Papierhülse.

22. Verfahren zum Züchten von Pflanzen unter Verwendung eines schwimmenden Flächenelementes nach einem der Ansprüche 1-19, wobei das Verfahren folgende Schritte aufweist:
- Vorsehen von mindestens einem Substrat mit einer Pflanze oder einem Vorläufer bzw. Sämling davon in einem Durchgangsloch des Flächenelementes, wobei das vorgesehene Substrat in einer Draufsicht ein kleineres Oberflächenmaß hat als ein Öffnungsquerschnitt des Durchgangsloches;
- Schwimmenlassen des Flächenelementes in einem mit Wasser gefüllten Becken.

23. Verfahren nach Anspruch 22, welches weiter folgenden Schritt aufweist:
- Liefern von Wasser auf die Oberseite des Flächenelementes, was bewirkt, dass das Substrat sich im Umfang ausdehnen, so dass es zu einem Öffnungsquerschnitt des Durchgangsloches an der ersten und/oder zweiten Ebene passt.

24. Verfahren nach Anspruch 22 oder 23, wobei Wasser zu der Oberseite des Flächenelementes geliefert wird, bis Wasser über die Luftkammer in das Becken fließt.

25. Verfahren nach Anspruch 22, 23 oder 24, wobei das Verfahren weiter folgende Schritte aufweist:
- Wachsenlassen der Pflanzen;
- Entfernen des Flächenelementes aus dem Becken;
- Abschneiden eines oberen Teils von jeder Pflanze und Zurücklassen des restlichen Teils der Pflanze und des entsprechenden Substrates in dem Flächenelement;
- Entfernen der Substrate mit den restlichen Pflanzenteilen aus den Durchgangslöchern des Flächenelementes; und
- Reinigen des Flächenelementes unter Verwendung eines Druckwaschgerätes.

## Revendications

1. Panneau flottant (100) pour cultiver des végétaux, le panneau comprenant :
une pluralité de trous traversants (140) sur un côté supérieur (T) du panneau, chacun adapté pour recevoir à l'intérieur un substrat (200) et un végétal ou un précurseur (300) de celui-ci, chaque trou traversant s'étendant à travers le panneau depuis un premier plan (P1) au niveau dudit côté supérieur jusqu'à un deuxième plan (P2) parallèle au premier plan (P1), et espacé de celui-ci ; et
au moins une chambre à air (160) sur un côté inférieur du panneau et qui est agencée pour permettre à l'intérieur la formation de racines aériennes de végétaux ou de leurs précurseurs supportés dans le substrat d'un ou plusieurs desdits trous traversants, chacune desdites chambres à air (160) comprenant un plafond (161) dans lequel débouchent un ou plusieurs desdits trous traversants (140) et une paroi latérale circonférentielle (162) délimitant ladite chambre, la paroi latérale circonférentielle étant agencée sensiblement au-dessous du deuxième plan (P2) et comprenant un bord inférieur circonférentiel (163) agencé pour s'étendre dans l'eau lorsque le panneau flotte sur l'eau ;
dans lequel autour de chacun desdits trous traversants (140), une ou plusieurs surfaces de support inférieures associées (141) sont prévues qui sont agencées au-dessous du premier plan (P1) pour supporter au moins partiellement le substrat (200) sur celles-ci à un emplacement au-dessous du premier plan(P1) ;
**caractérisé en ce que** le panneau comprend en outre :
une pluralité de surfaces de collecte d'eau (130, 135), chacune associée à au moins l'un des trous traversants et fusionnant dans les une ou plusieurs surfaces de support inférieures (141) qui sont prévues autour dudit trou traversant de sorte qu'au moins un trajet d'écoulement pour l'eau est formé à partir de la surface de collecte d'eau vers et le long des une ou plusieurs surfaces de support inférieures associées au trou traversant ; et
une pluralité de barrières à eau (150), chacune conçue pour empêcher sensiblement un écoulement d'eau depuis l'une des surfaces de collecte d'eau dans son trou traversant associé le long d'un trajet d'écoulement autre que le long des une ou plusieurs surfaces de support inférieures tout en permettant l'écoulement d'eau depuis ladite surface de collecte d'eau (130, 135) le long des une ou plusieurs surfaces de support inférieures (141).

2. Panneau flottant (100) selon la revendication 1, **caractérisé en ce qu'**un troisième plan (P3) est disposé parallèlement au premier plan (P1) et au deuxième plan (P2), et espacé de ceux-ci, de telle manière qu'une distance entre le premier plan (P1) et le troisième plan (P3) est supérieure à une distance entre le deuxième plan (P2) et le troisième plan (P3),
dans lequel chaque surface de support inférieure est adaptée pour être en contact avec le substrat (200) et/ou avec un emballage perméable à l'eau autour d'un côté du substrat, sur une hauteur s'étendant entre au moins le premier plan (P1) et le troisième plan (P3),
dans lequel chacune des surfaces de support inférieures (141) transite dans un bord adjacent (134) des une ou plusieurs surfaces de collecte d'eau adjacentes respectives (130) de telle manière qu'au moins un trajet d'écoulement est formé pour guider l'écoulement d'eau depuis la surface de collecte d'eau associée vers la surface de support inférieure et le long du trajet d'écoulement.

3. Panneau flottant (100) pour cultiver des végétaux, le panneau comprenant :
une pluralité de trous traversants (140) sur un côté supérieur (T) du panneau, chacun adapté pour recevoir à l'intérieur un substrat (200) et un végétal ou un précurseur (300) de celui-ci, chaque trou traversant s'étendant à travers le panneau depuis un premier plan (P1) au niveau dudit côté supérieur jusqu'à un deuxième plan (P2) parallèle au premier plan (P1), et espacé de celui-ci ; et
au moins une chambre à air (160) sur un côté inférieur du panneau et qui est agencée pour permettre à l'intérieur la formation de racines aériennes de végétaux ou de leurs précurseurs supportés dans le substrat d'un ou plusieurs desdits trous traversants, chacune desdites chambres à air (160) comprenant un plafond (161) dans lequel débouchent un ou plusieurs desdits trous traversants (140) et une paroi latérale circonférentielle (162) délimitant ladite chambre, la paroi latérale circonférentielle étant agencée sensiblement au-dessous du deuxième plan (P2) et comprenant un bord inférieur circonférentiel (163) agencé pour s'étendre dans l'eau lorsque le panneau flotte sur l'eau ;
dans lequel autour de chacun desdits trous traversants (140), une ou plusieurs surfaces de support inférieures associées (141) sont prévues qui sont agencées au-dessous du premier plan (P1) pour supporter au moins partiellement le substrat (200) sur celles-ci à un emplacement au-dessous du premier plan(P1) ;
**caractérisé en ce qu'**un troisième plan (P3) est disposé parallèlement au premier plan (P1) et au deuxième plan (P2), et espacé de ceux-ci, de telle manière qu'une distance entre le premier plan (P1) et le troisième plan (P3) est supérieure à une distance entre le deuxième plan (P2) et le troisième plan (P3),
dans lequel chaque surface de support inférieure est adaptée pour être en contact avec le substrat (200) et/ou avec un emballage perméable à l'eau autour d'un côté du substrat, sur une hauteur s'étendant entre au moins le premier plan (P1) et le troisième plan (P3),
le panneau comprenant en outre une pluralité de surfaces de collecte d'eau (130, 135), chacune associée à au moins l'un des trous traversants, et entourant celui-ci, et fusionnant dans les une ou plusieurs surfaces de support inférieures (141) qui sont prévues autour dudit trou traversant de sorte qu'au moins un trajet d'écoulement pour l'eau est formé à partir de la surface de collecte d'eau vers et le long des une ou plusieurs surfaces de support inférieures associées au trou traversant ;
dans lequel chacune des surfaces de support inférieures (141) transite dans un bord adjacent (134) des une ou plusieurs surfaces de collecte d'eau adjacentes respectives (130) de telle manière qu'au moins un trajet d'écoulement est formé pour guider l'écoulement d'eau depuis la surface de collecte d'eau associée vers la surface de support inférieure et le long du trajet d'écoulement.

4. Panneau flottant selon l'une quelconque des revendications précédentes, dans lequel les surfaces de support inférieures sont espacées de chaque autre le long de la circonférence de leur trou traversant associé par des espaces, de préférence chaque espace ayant une extrémité ouverte au niveau de son côté inférieur.

5. Panneau flottant selon l'une quelconque des revendications précédentes, dans lequel chacune de la pluralité de surfaces de collecte d'eau (130, 135) forme un angle non nul (α) par rapport au premier plan (P1), chaque trou traversant (140) étant adjacent à un bord inférieur (134) d'au moins l'une desdites surfaces de collecte d'eau (130, 135).

6. Panneau flottant selon l'une quelconque des revendications précédentes, dans lequel les unes ou plusieurs surfaces de support inférieures associées à un trou traversant comprennent au moins deux surfaces de support inférieures (141), de préférence au moins quatre surfaces de support inférieures, qui sont espacées les unes des autres autour de la circonférence du trou traversant associé.

7. Panneau flottant selon la revendication 6 lorsqu'elle dépend de la revendication 2 ou 3, dans lequel les au moins deux surfaces de support inférieures comprennent chacune une première section (142) et une seconde section adjacente (143), dans lequel la première section s'étend entre le premier plan (P1) et le troisième plan (P3) sensiblement à un angle (β) entre 0° et 15°, de préférence entre 5° et 10° par rapport à un plan normal au troisième plan, et dans lequel la seconde section s'étend au-dessous du troisième plan et s'incurve vers un axe central du trou traversant.

8. Panneau flottant selon l'une quelconque des revendications précédentes, dans lequel les surfaces de support inférieures sont pourvues de bords de d'accrochage (144) pour s'accrocher contre un ou plusieurs côtés d'un substrat.

9. Panneau flottant selon la revendication 7 ou 8, dans lequel la première section de chacune des surfaces de support inférieures est pourvue d'une pluralité de bords d'accrochage (144), faisant saillie vers le centre du trou traversant.

10. Panneau flottant selon l'une quelconque des revendications précédentes, dans lequel chacune des surfaces de collecte d'eau est associée à un trou traversant unique et chaque trou traversant est associé à une seule desdites surfaces de collecte d'eau.

11. Panneau flottant selon la revendication 10, dans lequel, lorsqu'observées sur une vue de dessus, toutes les surfaces de collecte d'eau ont une surface superficielle sensiblement identique.

12. Panneau flottant selon la revendication 10 ou 11, dans lequel, lorsqu'observée sur une vue de dessus, la surface superficielle totale de chaque surface de collecte d'eau est égale entre 4 et 10 fois la surface d'ouverture de son trou traversant associé.

13. Panneau flottant selon l'une quelconque des revendications précédentes, muni en outre d'un ou plusieurs trous d'air (132) qui s'étendent depuis le côté supérieur du panneau dans l'une des une ou plusieurs chambres à air (160), dans lequel, à un emplacement adjacent à l'ouverture du trou d'air sur le côté supérieur, une ou plusieurs nervures (133) sont prévues qui s'étendent au-dessus de l'ouverture.

14. Panneau flottant selon l'une quelconque des revendications précédentes, dans lequel les trous traversants de la pluralité de trous traversants (140) sont agencés en au moins deux rangées parallèles le long d'une direction longitudinale (L) du panneau, les trous traversants de chaque rangée étant espacés de manière équidistante.

15. Panneau flottant selon l'une quelconque des revendications précédentes, dans lequel le côté supérieur (T) du panneau comprend en outre une surface tournée vers le haut (110) qui s'étend parallèlement aux premier plan (P1) et deuxième plan (P2), et entre ceux-ci, dans lequel chacune des surfaces de collecte d'eau est surélevée par rapport à ladite surface tournée vers le haut (110).

16. Panneau flottant selon la revendication 15, dans lequel sur la surface tournée vers le haut, un bord surélevé circonférentiel est prévu pour collecter de l'eau sur la surface tournée vers le haut.

17. Panneau flottant selon l'une quelconque des revendications précédentes, dans lequel pour chaque trou traversant, lorsqu'observée sur une vue en coupe transversale à travers le deuxième plan, la surface dudit trou traversant est comprise entre 90 % et 70 % d'une surface dudit trou traversant lorsqu'observée sur une vue en coupe transversale à travers le premier plan (P1).

18. Panneau flottant selon l'une quelconque des revendications précédentes, dans lequel le panneau est formé d'une seule pièce, de préférence d'une pièce moulée par expansion.

19. Panneau flottant selon l'une quelconque des revendications précédentes, dans lequel le panneau comprend ou est essentiellement constitué de polypropylène expansé, de polyéthylène expansé ou de polystyrène expansé.

20. Ensemble de culture flottante de végétaux, l'ensemble comprenant le panneau flottant selon l'une quelconque des revendications 1 à 19 et une pluralité de substrats (200), chaque substrat étant prévu dans l'un de la pluralité de trous traversants et agencé pour recevoir dans celui-ci un végétal ou un précurseur de celui-ci, dans lequel un côté de chacun des substrats est au moins partiellement en contact direct avec les une ou plusieurs deux surfaces de support inférieures (141) d'un trou traversant.

21. Ensemble selon la revendication 20, dans lequel le substrat est un substrat compacté, un substrat maintenu conjointement par un agent collant ou un substrat maintenu conjointement par un emballage perméable à l'eau tel qu'un filet et/ou un manchon en papier.

22. Procédé de culture de végétaux utilisant un panneau flottant selon l'une quelconque des revendications 1 à 19, le procédé comprenant les étapes consistant à :
- fournir au moins un substrat avec un végétal ou un précurseur de celui-ci dans un trou traversant du panneau, le substrat fourni ayant une surface superficielle plus petite lorsqu'observé du dessus par rapport à une surface d'ouverture du trou traversant ;
- mettre à flotter le panneau dans un bassin rempli d'eau.

23. Procédé selon la revendication 22, comprenant l'étape supplémentaire consistant à
- fournir de l'eau au côté supérieur du panneau, provoquant l'expansion du substrat en circonférence pour qu'il corresponde à une surface d'ouverture du trou traversant au niveau du premier et/ou du deuxième plan.

24. Procédé selon la revendication 22 ou 23, dans lequel de l'eau est fournie au côté supérieur du panneau jusqu'à ce que l'eau s'écoule dans le bassin via la chambre à air.

25. Procédé selon la revendication 22, 23 ou 24, le procédé comprend en outre les étapes consistant à :
- laisser pousser les végétaux ;
- retirer le panneau du bassin ;
- couper une partie supérieure de chaque végétal et laisser la partie restante du végétal et le substrat correspondant dans le panneau ;
- retirer les substrats avec les parties végétales restantes des trous traversants du panneau ; et
- nettoyer le panneau à l'aide d'un nettoyeur haute-pression.
